(19) Europäisches Patentamt

European Patent Office

Office européen des brevets

(11) Publication number : **0 331 440 B1**

## (12) EUROPEAN PATENT SPECIFICATION

(45) Date of publication of patent specification :
**05.08.92 Bulletin 92/32**

(21) Application number : **89301993.5**

(22) Date of filing : **28.02.89**

(51) Int. Cl.⁵ : $B23Q\ 11/10$, $B24B\ 55/02$

(54) **Cutting, grinding and milling.**

(30) Priority : **01.03.88 GB 8804831**

(43) Date of publication of application :
**06.09.89 Bulletin 89/36**

(45) Publication of the grant of the patent :
**05.08.92 Bulletin 92/32**

(84) Designated Contracting States :
**AT BE CH DE ES FR GB GR IT LI LU NL SE**

(56) References cited :
**EP-A- 0 166 407
EP-A- 0 170 899
WO-A-84/01737
DE-A- 2 905 579**

(56) References cited :
**FR-A- 2 537 486
GB-A- 954 950
JP-A-57 156 147
JP-A-62 136 371
JP-A-62 228 351**

(73) Proprietor : **LESLIE HARTRIDGE LIMITED
Tingewick Road
Buckingham Buckinghamshire MK18 1EF (GB)**

(72) Inventor : **Mathers, John Walker
Fairhavan Cottage Buttons Lane Whitwell
Hitchin Hertfordshire, SG4 8AN (GB)**

(74) Representative : **Crouch, David John et al
Bromhead & Co. 19 Buckingham Street
London WC2N 6EF (GB)**

EP 0 331 440 B1

## Description

The present invention relates to a cutting, grinding or milling machine comprising holding means for holding a workpiece, a cutting, grinding or milling tool spindle positioned, in relation to the holding means, so that the tool may be brought into contact with such a workpiece when it is held by the holding means, and drive means connected to bring about relative movement between the spindle and the holding means such that the contact between the tool and the workpiece when the machine is in use moves in a generally circular path around the workpiece.

In creep feed grinding, in which a surface to be ground is traversed once or more by a grinding wheel to effect the desired depth of grinding along the surface, the speed with which a point on the grinding wheel cuts the surface which it is grinding is usually in excess of thirty metres per second. An immense amount of heat is therefore generated by friction. In addition, further heat is generated by plastic deformation of the metal. This is removed by means of a jet of coolant fluid, such as neat oil or an oil in water emulsion, which is directed at the point of contact between the grinding wheel and the workpiece. To be effective, the speed with which the coolant fluid is so directed needs to be at least the same order of magnitude as the speed with which a point on the grinding wheel cuts the surface of the workpiece. Furthermore, the jet needs to be directed fairly accurately at the point or region of contact. For a linear traverse, this can be performed relatively easily by keeping the jet nozzle or nozzles in a fixed position relative to the grinding wheel. However, it is difficult to maintain this condition when a generally circular traverse is required.

One way of maintaining this condition when a generally arcuate path is traversed is disclosed in EP-A-0,166,407 which forms the base for the pre-characterising part of the claims. However, that patent specification does not disclose or suggest how the condition might be maintained in the event that the generally arcuate path is inside the workpiece, nor does it disclose or suggest how the condition might be maintained in the event of movement of the contact in a radial direction during a circular traverse.

The present invention seeks to obviate this problem.

Accordingly, the present invention is directed to a machine having the construction set out in the opening paragraph of the present specification, in which the contact between the tool and the workpiece when the machine is in use moves in a generally circular path inside the workpiece, in which coolant directing means are so mounted to direct coolant at such contact inside the workpiece, the holding means and the coolant directing means being rotatable relative to one another to enable the coolant directing means to keep coolant trained on such contact as it moves around the workpiece, and in which adjustment means are connected to advance or retard relative rotation between the workpiece and the coolant directing means in dependence upon relative radial movement between the tool and the workpiece when the machine is in use, to keep the coolant directed at such contact notwithstanding such relative radial movement.

The present invention extends to a method of cutting, grinding or milling a workpiece comprising bringing a rotary cutting, grinding or milling tool into contact with a workpiece, and causing relative movement between the tool and the workpiece such that the contact between the tool and the workpiece moves in a generally circular path around the workpiece, in which the contact beteen the tool and the workpiece moves in a generally circular path inside the workpiece, in which coolant is directed at such contact by coolant directing means, causing relative rotation between the coolant directing means and the workpiece to keep coolant trained on such contact as it moves around the workpiece, and in which the relative rotation between the workpiece and the coolant directing means is advanced or retarded in dependence upon relative radial movement between the tool and the workpiece, to keep the coolant directed at such contact notwithstanding such relative radial movement.

An example of a machine made in accordance with the present invention is illustrated in the accompanying drawings, in which:-

Figure 1, shows a perspective partly cut-away view of the main parts of the machine; and

Figure 2 shows a diagrammatic elevational view of the machine.

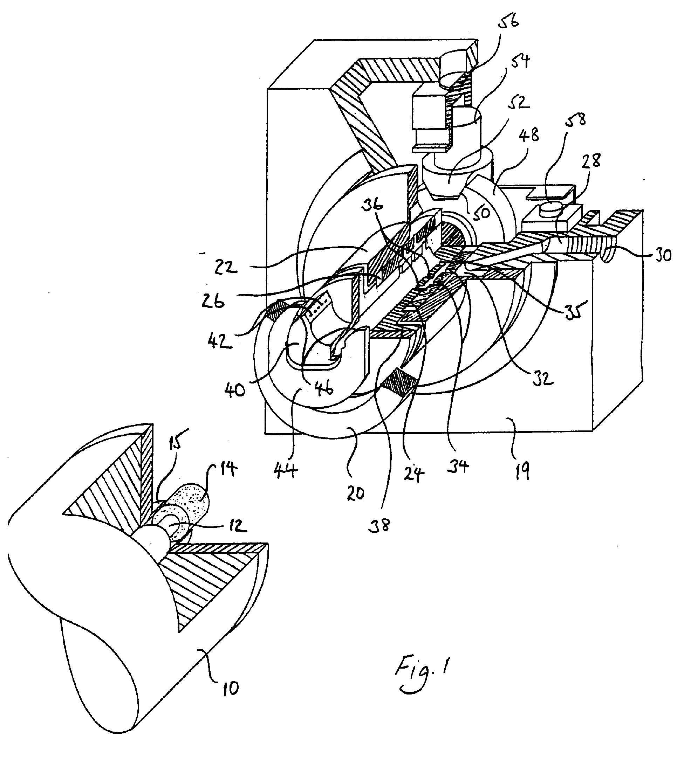

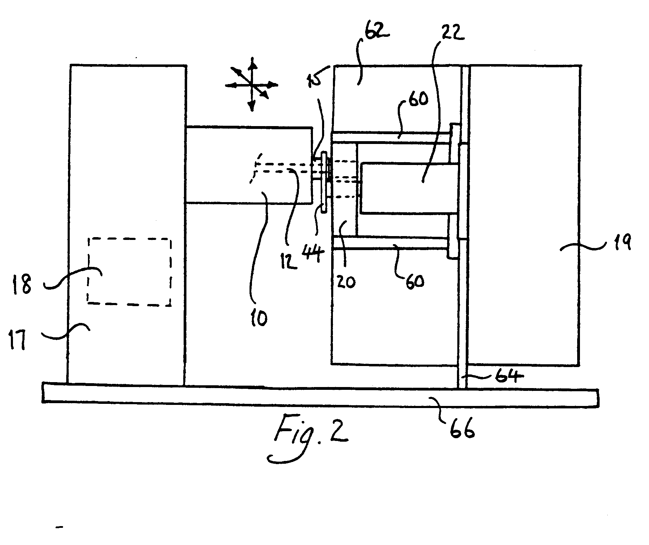

The parts shown in Figure 1 comprise an electric motor 10 through a central axis of which extends a grinding tool spindle 12 on the end of which is secured a grinding wheel 14. A sleeve 15 extends outwardly from a front plate of the motor 10, and surrounds one end of the spindle 12. It is fixed to the front plate of the motor 10 so that it remains stationary when the wheel 14 rotates. The motor 10 drives the spindle 12 to rotate it many tens of thousands of revolutions per minute, so that the speed of a point on the surface of the wheel 14 is in excess of 30 metres per second. A support 17 (shown in Figure 2) for the motor 10 enables the latter to be moved accurately in three mutually perpendicular directions in a manner known per se, under the control of a computer 18 which affords CNC operation.

A housing block 19 is provided with a bearing sleeve 22 within and along a central axis of which extends a hollow rotary spindle 24. Bearings 26 are provided in the sleeve 22 to facilitate rotation of the spindle 24 about its elongate axis.

A coolant duct 28 extends from a port 30 on the outside of the housing block 19 through to an interior 32 of the bearing sleeve 22. Apertures 34 in a further sleeve 35 between the sleeve 22 and the spindle 24 and apertures 36 in the spindle 24 enable coolant fluid to pass into the interior of the hollow spindle 24 to a forward end 38 thereof adjacent to the workpiece 20. Mounted on this forward end 38 is a manifold 40 comprising a line of jet nozzles 42 directed tangentially relative to the spindle axis. The line of the nozzles 42 extends in the direction of the axis of the spindle 24. The interior of the spindle 24 is in communication with the jet nozzles 42 via the interior of the manifold 40.

A cam 44 is attached to the front end of the manifold 40. The cam is generally U-shaped, with the inside surfaces 46 of the arms thereof curving in a generally clockwise direction viewing the machine as in Figure 1, and progressing radially away from the axis of the shaft 24, so that they extend in a tangential direction at their outer extremities. These inside surfaces 46 are the cam surfaces. The spacing between the cam surfaces 46 is equal or substantially equal to the outer diameter of the sleeve 15, and remains constant with increasing distance from the axis of the spindle 24.

Within and to the rear of the housing block 19 there is provided a lock ring 48 attached to the rear end of the spindle 24. The ring 48 is provided with a notch 50 which can be engaged by a lock 52 on a piston 54 to prevent the spindle 24 rotating. A pneumatic cylinder 56 is mounted on the housing block 19 and receives the piston 54 to facilitate movement thereof in a verticle direction to engage or disengage the lock 52 in the locking ring 48. A further piston and cylinder arrangement (not shown) is provided on the underside of the lock 52. Thus air pressure in the cylinder 56 urges the lock 52 downwardly, and pressure in the other cylinder urges it upwardly. A proximity switch 58 is provided to give an indication of when the lock is engaged.

It will be seen from Figure 2 how the workpiece 20 is held between the jaws 60 of a chuck 62 which is mounted on the same plate 64 as the housing 19. The plate 64 is in turn mounted on the same base 66 of the machine as the support 17.

In operation, the electric motor 10 is moved towards the chuck 62 so that the sleeve 15 is received between the arms of the cam 44. The grinding wheel 14 is then rotated at high speed in a clockwise sense viewing the machine as in Figure 1, and as it is rotated it is urged outwardly against the inside surface of the workpiece 20 so that it grinds the latter away to the required depth at the initial position of contact of the grinding wheel on the workpiece. The length of the sleeve 15 is sufficient to allow for axial oscillations of the motor 10 without the sleeve disengaging the cam 44. This position is clearly defined by reference to the parking position of the locking ring 48. While the grinding wheel 14 is grinding the workpiece 20, coolant fluid is forced at high pressure through the inlet port 30 to the jet nozzles 42 via the interior of the spindle 24 so that the fluid is trained accurately on the position of contact between the wheel and the workpiece.

While the workpiece 20 is held stationary, the lock 52 is disengaged and the motor is moved in a generally circular path following the generally circular inside surface of the workpiece 20. As it does so, it rotates the cam 44 together with the manifold 40 of the hollow shaft 44 by virtue of the engagement of the sleeve 15 with the cam 44, and the fact that the spindle 24 is free to rotate in sympathy with movement of the wheel motor 10 in this manner. As a result, the nozzle jets 42 precede the wheel 14 as it moves around the inside of the workpiece 20, and coolant is continually trained on the contact between the wheel and the workpiece notwithstanding the movement of the wheel. On completion of the generally circular path, the lock 52 is re-engaged, and the spindle wheel 14 is withdrawn.

In the event that the wheel 14 is required to cut more deeply into the workpiece 20 at a particular position thereof, the wheel 14 is moved under the control of the computer 18 further away from the axis of the shaft 24. Were it not for the curving of the inside surfaces 46 of the two arms of the cam 44, this would result in the coolant jets being trained on a position of the rotated wheel 14 that is inwards of the contact between the wheel and the workpiece. This in turn would result in overheating of both the wheel and the workpiece. However, because the inside surfaces 46 are curved as described herein, the outward movement of the wheel 14 causes the cam 44, and with it the manifold 40 and the shaft 24, to be advanced in an anti-clockwise direction viewing the machine as in Figure 1, so that coolant is kept trained on the contact between the wheel 14 and the workpiece 20. Similarly, if the wheel is moved radially inwardly towards the shaft of the axis 24, the engagement of the sleeve 15 with the inside surfaces 46 causes rotation of the manifold 40 to be retarded, and the coolant fluid to be kept trained on the contact between the wheel 14 and the workpiece 20.

Numerous variations and modifications to the machine will readily occur to a person familiar with the art of grinding, without taking it outside the scope of the present invention. For example, the relative movement of the manifold 40, to advance or retard its angular position relative to the grinding wheel 14, can be effected by a motor controlled by computer rather than by the mechanical method which uses the cam 44. If the manifold 40 is rotated backwards by a whole turn after every grinding turn, so that it never turns through more than 360°, the coolant fluid could be fed direct to the manifold 40 via flexible tubing rather than through the illustrated passageways.

**Claims**

1. A cutting, grinding or milling machine comprising holding means (62) for holding a workpiece (20), a cutting, grinding or milling tool spindle (12) positioned, in relation to the holding means (62), so that the tool (14) may be brought into contact with such a workpiece (20) when it is held by the holding means (62), and drive means (17) connected to bring about relative movement between the spindle (12) and the holding means (62) such that the contact between the tool (14) and the workpiece (20) when the machine is in use moves in a generally circular path around the workpiece (20), characterised in that the contact between the tool (14) and the workpiece (20) when the machine is in use moves in a generally circular path inside the workpiece (20), in that coolant directing means (40) are so mounted to direct coolant at such contact inside the workpiece (20), the holding means (62) and the coolant directing means (40) being rotatable relative to one another to enable the coolant directing means (40) to keep coolant trained on such contact as it moves around the workpiece (20), and in that adjustment means (44) are connected to advance or retard relative rotation between the workpiece (20) and the coolant directing means (40) in dependence upon relative radial movement between the tool (14) and the workpiece (20) when the machine is in use, to keep the coolant directed at such contact notwithstanding such relative radial movement.

2. A cutting, grinding or milling machine according to claim 1, characterised in that the adjustment means (44) comprises a coupling member (44) which couples movement between the spindle (12) and the coolant directing means (44) to advance or retard relative rotation between the workpiece (20) and the coolant directing means (40) in the manner set out in claim 1.

3. A cutting, grinding or milling machine according to claim 2, characterised in that the coupling member (44) comprises a cam (44) which is fixed relative to the coolant directing means (40), there being a part (15) which is fixed relative to the spindle axis and which engages the cam (44) to advance or retard relative rotation between the workpiece (20) and the coolant directing means (40) in the manner set out in claim 1.

4. A cutting, grinding or milling machine according to claim 3, characterised in that the cam (44) comprises curved portions which are spaced apart from one another to define a curved space therebetween which receives the said part (15) constituted by a sleeve which surrounds the spindle (12).

5. A cutting, grinding or milling machine according to claim 4, characterised in that the cam (44) comprises a U-shaped member (44) the arms of which constitute the said curved portions.

6. A method of cutting, grinding or milling a workpiece, comprising bringing a rotary cutting, grinding or milling tool (14) into contact with a workpiece (20), and causing relative movement between the tool (14) and the workpiece (20) such that the contact between the tool (14) and the workpiece (20) moves in a generally circular path around the workpiece (20), characterised in that the contact between the tool (14) and the workpiece (20) moves in a generally circular path inside the workpiece (20), in that coolant is directed at such contact inside the workpiece (20) by coolant directing means (40), in that relative rotation between the coolant directing means (40) and the workpiece (20) is caused to keep coolant trained on such contact as it moves around the workpiece (20), and in that the relative rotation between the workpiece (20) and the coolant directing means (40) is advanced or retarded in dependence upon relative radial movement between the tool (14) and the workpiece (20), to keep the coolant directed at such contact notwithstanding such relative radial movement.

**Patentansprüche**

1. Span-, Schleif- oder Fräsmaschine, die Halteeinrichtungen (62) zum Halten eines Werkstückes (20), eine Span-, Schleif- oder Fräswerkzeugspindel (12), welche in bezug auf die Halteeinrichtungen (62) derart angeordnet ist, daß das Werkzeug (14) mit solch einem Werkstück (20) in Kontakt gebracht werden kann, wenn es von den Halteeinrichtungen (62) gehalten ist, und Antriebseinrichtungen (17) umfaßt, welche verbunden sind, um eine Relativbewegung zwischen der Spindel (12) und den Halteeinrichtungen (62) derart hervorzurufen, daß der Kontakt zwischen dem Werkzeug (14) und dem Werkstück (20) in einem allgemein kreisförmigen Umlauf um das Werkstück (20) erfolgt, wenn die Maschine in Betrieb ist, dadurch gekennzeichnet, daß der Kontakt zwischen dem Werkzeug (14) und dem Werkstück (20) in einem allgemein kreisförmigen Umlauf in dem Werkstück (20) erfolgt, wenn die Maschine in Betrieb ist, daß Kühlmittelzuführeinrichtungen (40) so angeordnet sind, um Kühlmittel auf den Kontakt im Inneren des Werkstückes (20) zu richten, wobei die Halteeinrichtungen (62) und die Kühlmittelzuführeinrichtungen (40) relativ zueinander drehbar sind, um die Kühlmittelzuführeinrichtungen (40) in die Lage zu versetzen, Kühlmittel entsprechend seiner Bewegung um das Werkstück (20) auf diesem Kontakt gerichtet zu halten, und daß Einstelleinrichtungen (44) verbunden sind, um die Relativdrehung zwischen dem Werkstück (20) und den Kühlmittelzuführeinrichungen (40) in Abhängigkeit von relativer Radialbewegung zwischen dem Werkzeug (14) und dem Werkstück (20) zu beschleunigen oder zu verzögern, wenn die Maschine in Betrieb ist, um das Kühlmittel ungeachtet der relativen Radialbewegung auf den Kontakt gerichtet zu halten.

2. Span-, Schleif- oder Fräsmaschine nach Anspruch 1, dadurch gekennzeichnet, daß die Einstelleinrichtungen (44) ein Kupplungselement (44) umfassen, das die Bewegung zwischen der Spindel (12) und den Kühlmittelzuführeinrichtungen (40) verbindet, um die Relativbewegung zwischen dem Werkstück (20) und den Kühlmittelzuführeinrichtungen (40) in der in Anspruch 1 angeführten Weise zu beschleunigen oder zu verzögern.

3. Span-, Schleif- oder Fräsmaschine nach Anspruch 2, dadurch gekennzeichnet, daß das Kupplungselement (44) eine relativ zu den Kühlmittelzuführeinrichtungen (40) festgelegte Nocke (44) umfaßt und ein relativ zu der Spindelachse festgelegtes Teil (15) vorgesehen ist, welches in die Nokke (44) eingreift, um die Relativdrehung zwischen dem Werkstück (20) und den Kühlmittelzuführeinrichtungen (40) in der in Anspruch 1 angeführten Weise zu beschleunigen oder zu verzögern.

4. Span-, Schleif- oder Fräsmaschine nach Anspruch 3, dadurch gekennzeichnet, daß die Nocke (44) gebogene Abschnitte umfaßt, die voneinander beabstandet sind, um einen gekrümmten Raum dazwischen zu definieren, der das Teil (15) aufnimmt, welches durch eine die Spindel (12) umgebende Buchse gebildet ist.

5. Span-, Schleif- oder Fräsmaschine nach Anspruch 4, dadurch gekennzeichnet, daß die Nocke (44) ein U-förmiges Element (44) umfaßt, dessen Arme die gebogenen Abschnitte bilden.

6. Verfahren zum Spanen, Schleifen oder Fräsen eines Werkstückes, das ein Inkontaktbringen eines sich drehenden Span-, Schleif- oder Fräswerkzeuges (14) mit einem Werkstück (20) und ein Hervorrufen einer Relativbewegung zwischen dem Werkzeug (14) und dem Werkstück (20) derart umfaßt, daß der Kontakt zwischen dem Werkzeug (14) und dem Werkstück (20) in einem allgemein kreisförmigen Umlauf um das Werkstück (20) erfolgt, dadurch gekennzeichnet, daß der Kontakt zwischen dem Werkzeug (14) und dem Werkstück (20) in einem allgemein kreisförmigen Umlauf in dem Werkstück (20) erfolgt, daß Kühlmittel durch Kühlmittelzuführeinrichtungen (40) auf solchen Kontakt innerhalb des Werkstückes (20) gerichtet wird, daß eine Relativdrehung zwischen Kühlmittelzuführeinrichtungen (40) und dem Werkstück (20) erzeugt wird, um Kühlmittel entsprechend seiner Bewegung um das Werkstück (20) auf solchen Kontakt gerichtet zu halten, daß die Relativdrehung zwischen dem Werkstück (20) und den Kühlmittelzuführeinrichtungen (40) in Abhängigkeit von der relativen Radialbewegung zwischen dem Werkzeug (14) und dem Werkstück (20) beschleunigt oder verzögert wird, um das Kühlmittel ungeachtet solcher relativer Radialbewegung auf solchen Kontakt gerichtet zu halten.

**Revendications**

1. Machine à couper, à rectifier ou à fraiser, comprenant des moyens de retenue (62) pour maintenir une pièce à usiner (20), une broche (12) d'un outil à couper, à rectifier ou à fraiser, laquelle est positionnée, par rapport aux moyens de retenue (62), d'une manière telle que l'outil (14) puisse être amené en contact avec une telle pièce à usiner (20) lorsque celle-ci est maintenue par les moyens de retenue (62), et des moyens d'entraînement (17) montés de façon à produire un déplacement relatif entre la broche (12) et les moyens de retenue (62), d'une manière telle que l'endroit du contact entre l'outil (14) et la pièce à usiner (20) se déplace autour de la pièce à usiner (20) selon un trajet globalement circulaire lorsque la machine est en fonctionnement, caractérisée par le fait que l'endroit du contact entre l'outil (14) et la pièce à usiner (20) se déplace selon un trajet globalement circulaire à l'intérieur de la pièce à usiner (20) lorsque la machine est en fonctionnement, par le fait que des moyens (40) pour diriger un agent de refroidissement sont montés de façon à diriger de l'agent de refroidissement sur un tel endroit de contact à l'intérieur de la pièce à usiner (20), les moyens de retenue (62) et les moyens (40) pour diriger un agent de refroidissement pouvant tourner les uns par rapport aux autres pour permettre aux moyens (40) pour diriger un agent de refroidissement de maintenir de l'agent de refroidissement entraîné sur un tel endroit de contact lorsqu'il se déplace autour de la pièce à usiner (20), et par le fait que des moyens de réglage (44) sont montés pour avancer ou retarder la rotation relative entre la pièce à usiner (20) et les moyens (40) pour diriger un agent de refroidissement en fonction du déplacement radial relatif entre l'outil (14) et la pièce à usiner (20) lorsque la machine est en fonctionnement, afin de maintenir l'agent de refroidissement dirige sur un tel endroit de contact malgré un tel déplacement radial relatif.

2. Machine à couper, à rectifier ou à fraiser selon la revendication 1, caractérisée par le fait que les moyens de réglage (44) comprennent un organe d'accouplement (44) qui accouple le déplacement entre la broche (12) et les moyens (40) pour diriger un agent de refroidissement, afin d'avancer ou de retarder la rotation relative entre la pièce à usiner (20) et les moyens (40) pour diriger un agent de refroidissement, et ce, de la manière spécifiée dans la revendication 1.

3. Machine à couper, à rectifier ou à fraiser selon la revendication 2, caractérisée par le fait que l'organe d'accouplement (44) comprend une came (44) qui est fixe par rapport aux moyens (40) pour diriger un agent de refroidissement, cependant qu'il existe une partie (15) qui est fixe par rapport à l'axe de la broche et qui vient en prise avec la came (44) pour avancer ou retarder la rotation relative entre la pièce à usiner (20) et les moyens (40) pour diriger un agent de refroidissement, et ce, de la manière spécifiée dans la revendication 1.

4. Machine à couper, à rectifier ou à fraiser selon la revendication 3, <u>caractérisée par le fait que</u> la came (44) comprend des portions courbes qui sont espacées l'une de l'autre afin de définir entre elles un espace courbe qui reçoit ladite partie (15), laquelle est constituée par un manchon qui entoure la broche (12).

5. Machine à couper, à rectifier ou à fraiser selon la revendication 4, <u>caractérisée par le fait</u> que la came (44) comprend un organe en forme de U (44) dont les bras constituent lesdites portions courbes.

6. Procédé pour couper, rectifier ou fraiser une pièce à usiner, comprenant le fait d'amener un outil rotatif à couper, à rectifier ou à fraiser (14) en contact avec une pièce à usiner (20), et de produire un déplacement relatif entre l'outil (14) et la pièce à usiner (20), d'une manière telle que l'endroit du contact entre l'outil (14) et la pièce à usiner (20) se déplace selon un trajet globalement circulaire autour de la pièce à usiner (20), <u>caractérisé par le fait que</u> l'endroit du contact entre l'outil (14) et la pièce à usiner (20) se déplace selon un trajet globalement circulaire à l'intérieur de la pièce à usiner (20), <u>par le fait que</u> de l'agent de refroidissement est dirigé sur un tel endroit de contact situé à l'intérieur de la pièce à usiner (20) par des moyens (40) pour diriger un agent de refroidissement, <u>par le fait que</u> la rotation relative entre les moyens (40) pour diriger un agent de refroidissement et la pièce à usiner (20) est amenée à maintenir de l'agent de refroidissement entraîné sur un tel endroit de contact lorsqu'il se déplace autour de la pièce à usiner (20), et par le fait que la rotation relative entre la pièce à usiner (20) et les moyens (40) pour diriger un agent de refroidissement est avancée ou retardée en fonction du déplacement radial relatif entre l'outil (14) et la pièce à usiner (20), afin de maintenir l'agent de refroidissement dirigé sur un tel endroit de contact malgré un tel déplacement radial relatif.

Fig. 1

Fig. 2